# EUROPEAN PATENT APPLICATION

(11) **EP 2 955 819 A1**
(43) Date of publication of application: **16.12.2015**
(21) Application number: 14797242.6
(22) Date of filing: 26.03.2014
(51) Int. Cl.: H02K 15/06

(54) **PRODUCTION METHOD FOR STATOR FOR ROTATING ELECTRICAL MACHINES**

(30) Priority: 17.05.2013 JP 2013105346
(71) Applicant: Aisin Aw Co., Ltd., Anjo-shi, Aichi 444-1192 (JP); TOYOTA JIDOSHA KABUSHIKI KAISHA, Toyota-shi, Aichi 471-8571 (JP)
(72) Inventor: HASHIMOTO Shingo, Anjo-shi Aichi 444-1192 (JP); YOKOYAMA Takeshi, Anjo-shi Aichi 444-1192 (JP); TANAKA Hiroyuki, Anjo-shi Aichi 444-1192 (JP); IWATSUKI Kazuya, Anjo-shi Aichi 444-1192 (JP); HASHIMOTO Takahiro, Anjo-shi Aichi 444-1192 (JP); MIYATA Hisao, Anjo-shi Aichi 444-1192 (JP); YOSHIKAWA Kirika, Anjo-shi Aichi 444-1192 (JP); OTA Takanori, Anjo-shi Aichi 444-1192 (JP); KAWAURA Hirotaka, Toyota-shi Aichi 471-8571 (JP); AKAO Norihiko, Toyota-shi Aichi 471-8571 (JP); SUGIMOTO Tetsuya, Toyota-shi Aichi 471-8571 (JP); NAKAGAMI Yukihiko, Toyota-shi Aichi 471-8571 (JP)
(74) Representative: Kramer Barske Schmidtchen Patentanwälte PartG mbB
(86) International application number: PCT/JP2014/058412
(87) International publication number: WO 2014/185156

(57) **Abstract**

Rotation placement coils 3B other than the last coil 3C to be placed on a tooth 21 are placed on teeth 21 in the following manner. An outer peripheral end 321 of a one-side conductor portion 32A located on one side C1 in the circumferential direction of the rotation placement coil 3B is moved along a tip-end parallel side surface 211 of the tooth 21 and is then moved along a base-end tilted side surface 212 of the tooth 21. The rotation placement coil 3B is rotated about the outer peripheral end 321 of the one-side conductor portion 32A to insert the other-side conductor portion 32B into the other-side slot 22B.

## Description

### TECHNICAL FIELD

The present invention relates to a method for manufacturing a stator for a rotating electrical machine by placing coils in a stator core.

### BACKGROUND ART

Methods for manufacturing a stator for a rotating electrical machine include a method in which coils are placed in a stator core shaped as a single-piece member and a method in which a stator core is divided into segment cores, coils are placed on the segment cores, and the segment cores having the coils placed thereon are coupled to each other. The coil can be formed by winding a collection of a plurality of thin magnet wires or by winding a single rectangular wire.

For example, Patent Document 1 discloses an apparatus for manufacturing a motor stator in which a plurality of trapezoidal coils formed by bending a rectangular conductor having a rectangular section are inserted into a plurality of teeth in a stator core. This manufacturing apparatus has a coil shape restricting member that restricts the trapezoidal coil to an obliquely deformed state. The trapezoidal coil is inserted on the tooth while preventing twisting of the windings by the coil shape restricting member

### [Related Art Document]

### [Patent Document]

[Patent Document 1] Japanese Patent Application Publication No. 2012-257410 (JP 2012-257410 A)

### SUMMARY OF THE INVENTION

### [Problem to be Solved by the Invention]

In the manufacturing apparatus of Patent Document 1, the trapezoidal coil need always be restricted to the obliquely deformed state by the coil shape restricting member when inserting the trapezoidal coil on the tooth, and no measures are taken to allow the trapezoidal coil to be placed on the tooth without the need to be deformed.

The present invention was developed in view of the above circumstances and in an attempt to provide a method for manufacturing a stator for a rotating electrical machine in which at least one of a plurality of coils other than the last coil to be placed on a tooth can be smoothly placed on a tooth without the need to be deformed.

### [Means for Solving the Problem]

According to one aspect of the present invention, a method for manufacturing a stator for a rotating electrical machine by placing a plurality of coils in a stator core is characterized in that each of a plurality of teeth formed in a radial pattern in an inner periphery of an annular yoke portion in the stator core has tip-end parallel side surfaces at its tip end portion having a constant width in a circumferential direction, and has base-end tilted side surfaces in its base end portion whose width in the circumferential direction increases as closer to an outer periphery, when sequentially placing the coils on the teeth of the stator core one by one in the circumferential direction, at least one of the plurality of rotation placement coils other than the last coil to be placed on the tooth is placed on the tooth by performing a first insertion step of rotating the rotation placement coil placed so as to directly face the tooth about an axis parallel to a central axis of the stator core so that the rotation placement coil faces in a tilted state the tooth, and inserting an outer peripheral end of a one-side conductor portion located on one side in the circumferential direction of the rotation placement coil into an opening of a one-side slot located on the one side in the circumferential direction of the tooth, a second insertion step of moving the outer peripheral end of the one-side conductor portion along the tip-end parallel side surface so as to insert the one-side conductor portion further into the one-side slot, and rotating the rotation placement coil about the outer peripheral end of the one-side conductor portion so as to insert an outer peripheral end of the other-side conductor portion located on the other side in the circumferential direction of the rotation placement coil into an opening of the other-side slot located on the other side in the circumferential direction of the tooth, a third insertion step of moving the outer peripheral end of the one-side conductor portion along the base-end tilted side surface so as to insert the one-side conductor portion further into the one-side slot, and rotating the rotation placement coil about the outer peripheral end of the one-side conductor portion so as to insert the other-side conductor portion further into the other-side slot, and a fourth insertion step of causing the rotation placement coil to directly face the tooth, and simultaneously inserting the one-side conductor portion and the other-side conductor portion into the one-side slot and the other-side slot.

### [Effects of the Invention]

The above method for manufacturing a stator for a rotating electrical machine is devised so that the coils need not be deformed when being placed on the teeth having the tip-end parallel side surfaces and the base-end tilted side surfaces.

In this manufacturing method, the coils are sequentially placed on the teeth of the stator core one by one in the circumferential direction. At least one of the coils other than the last coil to be placed on the tooth (hereinafter referred to as the "rotation placement coils") is placed on the tooth by performing the following first to fourth insertion steps.

When placing the rotation placement coil on the tooth, the rotation placement coil placed so as to directly face the tooth is first rotated about the axis parallel to the central axis of the stator core in the first insertion step so as to face in a tilted state the tooth. The outer peripheral end of the one-side conductor portion located on the one side in the circumferential direction of the rotation placement coil is inserted into the opening of the one-side slot located on the one side in the circumferential direction of the tooth. In this step, the rotation placement coil is tilted by an appropriate angle that allows the outer peripheral end of the one-side conductor portion to pass through the opening of the one-side slot.

Then, in the second insertion step, the outer peripheral end of the one-side conductor portion of the rotation placement coil is moved along the tip-end parallel side surface so that the one-side conductor portion is inserted further into the one-side slot. Simultaneously with this insertion, the rotation placement coil is rotated about the outer peripheral end of the one-side conductor portion so that the outer peripheral end of the other-side conductor portion located on the other side in the circumferential direction of the rotation placement coil is inserted into the opening of the other-side slot located on the other side in the circumferential direction of the tooth.

Thereafter, in the third insertion step, the outer peripheral end of the one-side conductor portion is moved along the base-end tilted side surface so that the one-side conductor portion is inserted further into the one-side slot. The rotation placement coil is also rotated about the outer peripheral end of the one-side conductor portion so that the other-side conductor portion is inserted further into the other-side slot. In the second and third insertion steps, the rotation placement coil is rotated and placed on the tooth. The one-side conductor portion of the rotation placement coil can thus be made not to interfere with the tooth or the previous rotation placement coil placed on the tooth.

In the fourth insertion step, after the rotation placement coil directly faces the tooth, the one-side conductor portion and the other-side conductor portion are moved radially outward and placed simultaneously in the one-side slot and the other-side slot.

The first to fourth insertion steps are thus sequentially performed for the plurality of rotation placement coils, and the plurality of rotation placement coils are sequentially placed on the teeth of the stator core one by one in the circumferential direction. The plurality of rotation placement coils can be smoothly placed on the teeth without the need to be deformed.

In the above method for manufacturing a stator for a rotating electrical machine, at least one of the plurality of rotation placement coils other than the last coil to be placed on the tooth can therefore be smoothly placed on the teeth without the need to be deformed.

### BRIEF DESCRIPTION OF THE DRAWINGS

[FIG. 1] FIG. 1 is an illustration showing the state where a rotation placement coil is placed on a tooth in a first insertion step according to an embodiment.
[FIG. 2] FIG. 2 is an illustration showing the state where the rotation placement coil is placed on the tooth in a second insertion step according to the embodiment.
[FIG. 3] FIG. 3 is an illustration showing the state where the rotation placement coil is placed on the tooth in the second insertion step according to the embodiment.
[FIG. 4] FIG. 4 is an illustration showing the state where the rotation placement coil is placed on the tooth in a third insertion step according to the embodiment.
[FIG. 5] FIG. 5 is an illustration showing the state where the rotation placement coil is placed on the tooth in the third insertion step according to the embodiment.
[FIG. 6] FIG. 6 is an illustration showing the state where the rotation placement coil is placed on the tooth in a fourth insertion step according to the embodiment.
[FIG. 7] FIG. 7 is an illustration showing the state where the rotation placement coil has been placed on the tooth in the fourth insertion step according to the embodiment.
[FIG. 8] FIG. 8 is an illustration showing the state where the first coil has been placed on a tooth according to the embodiment.
[FIG. 9] FIG. 9 is an illustration showing the state where the deformed last coil has been deformed.
[FIG. 10] FIG. 10 is an illustration showing the state where the last coil is placed on a tooth according to the embodiment.
[FIG. 11] FIG. 11 is an illustration showing the state where the last coil has been placed on the tooth according to the embodiment.
[FIG. 12] FIG. 12 is an illustration showing a stator according to the embodiment.
[FIG. 13] FIG. 13 is an illustration conceptually showing operation of an assembly jig according to the embodiment.
[FIG. 14] FIG. 14 is a perspective view showing a holding portion in a movable jig part of the assembly jig according to the embodiment.

### MODES FOR CARRYING OUT THE INVENTION

Preferred modes for carrying out the above method for manufacturing a stator for a rotating electrical machine will be described.

In the above method for manufacturing a stator for a rotating electrical machine, the outer peripheral end of the one-side conductor portion and the outer peripheral end of the other-side conductor portion refer to the ends that are located on the yoke side when the coil is placed on the outer periphery of the tooth of the stator core.

The first to fourth insertion steps can be performed for all of the plurality of rotation placement coils other than the last coil to be placed on the tooth. The first to fourth insertion steps may be performed for all of the plurality of rotation placement coils other than the first and last coils to be placed on the teeth.

The circumferential direction in which the coils are sequentially placed may be the one side in the circumferential direction, or may be the other side in the circumferential direction.

All of the coils may be formed by winding a rectangular wire in a plurality of layers arranged in the circumferential direction so that the coil conforms to a shape of the tooth which is formed by the tip-end parallel side surfaces and the base-end tilted side surfaces.

In this case, the use of the rectangular wire can increase the ratio of the slot of the stator core occupied by the coil.

The rotation placement coil may have been wound around an insulator made of an insulating resin when being placed on the tooth.

In this case, the rotation placement coil and the insulator can be simultaneously placed on the tooth of the stator core, which can reduce the time required to manufacture the stator.

The insulator for the last coil to be placed on the tooth may be placed in advance on the tooth, and the last coil may be deformed into a shape of a rhombus so that the rectangular wires located next to each other in a winding axial direction are shifted in a lateral direction, and one of the outer peripheral end of the one-side conductor portion and the outer peripheral end of the other-side conductor portion which has an acute-angled corner may first be inserted into the slot.

In this case, the insulator for the last coil to be placed on the tooth is placed in advance on the tooth, and the last coil is deformed into the shape of a rhombus, whereby the last coil can be easily placed on the tooth.

The method may use an assembly jig having a movable jig part that holds the rotation placement coil and that is placed so as to face an inner periphery of the tooth, and a base jig part where the movable jig part is movably placed, and in the first to fourth insertion steps, the rotation placement coil held by the movable jig part may be placed on the tooth by moving a roller provided in the movable jig part along a guide rail provided in the base jig part.

In this case, the use of the assembly jig having the movable jig part and the base jig part can further facilitate placement of the rotation placement coil on the tooth. A path in which the rotation placement coil is moved when being placed can be appropriately formed by moving the roller along the guide rail.

### [Embodiment]

An embodiment of a method for manufacturing a stator for a rotating electrical machine will be described below with reference to the accompanying drawings.

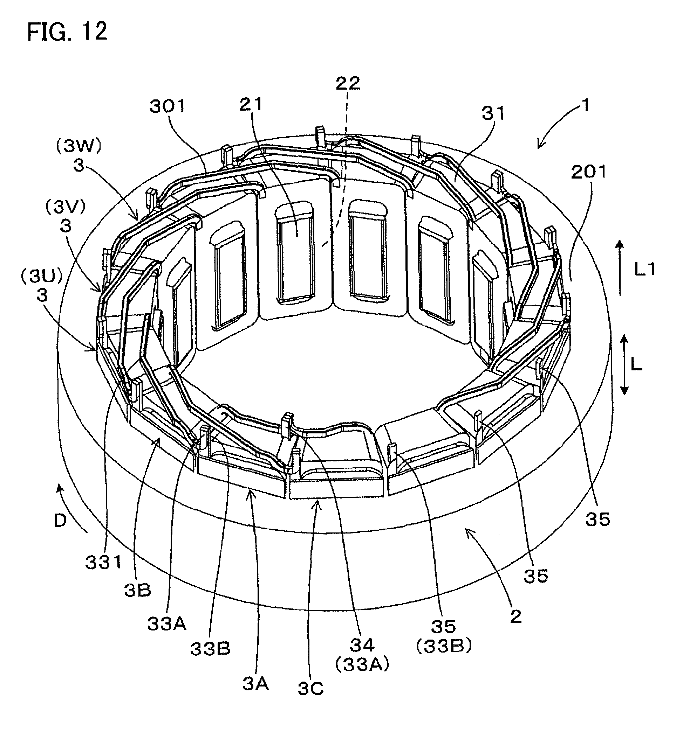

In a method for manufacturing a stator 1 for a rotating electrical machine according to the present embodiment, the stator 1 is manufactured by placing a plurality of coils 3 in a stator core 2 as shown in FIG. 12.

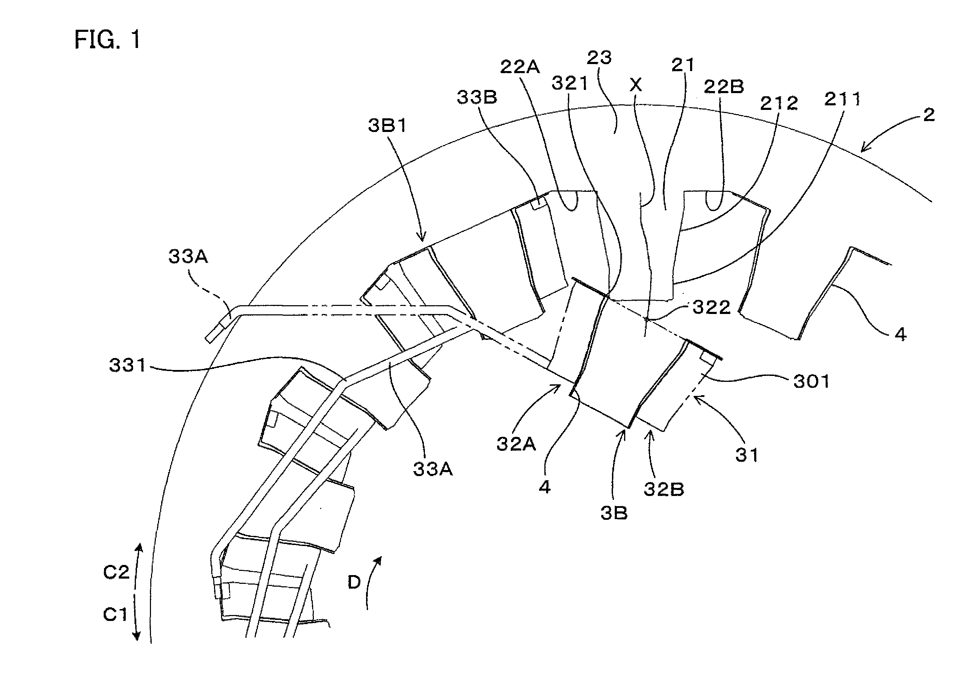

As shown in FIG. 1, each of a plurality of teeth 21 that are formed in a radial pattern in the inner periphery of an annular yoke portion 23 in the stator core 2 has tip-end parallel side surfaces 211 at its tip end portion having a constant width in the circumferential direction, and has base-end tilted side surfaces 212 in its base end portion whose width in the circumferential direction increases as closer to the outer periphery. Each coil 3 is formed by winding a rectangular wire 301 into a plurality of turns.

When sequentially placing the coils 3 on the teeth 21 of the stator core 2 one by one in the circumferential direction D, the rotational placement coils 3B other than the last coil 3C to be placed on the tooth 21 are placed on the teeth 21 by performing the following first to fourth insertion steps.

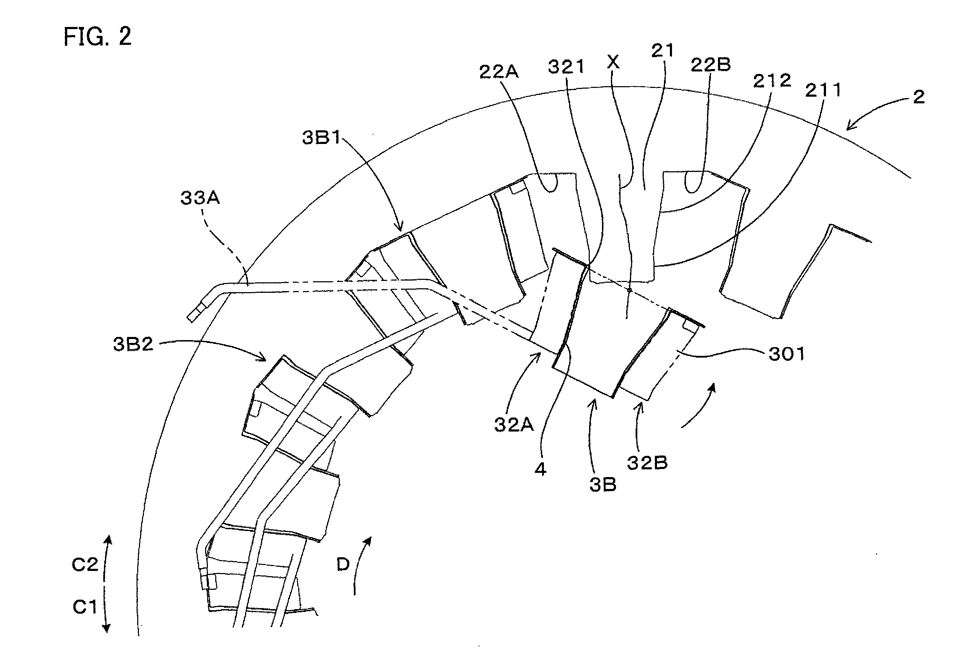

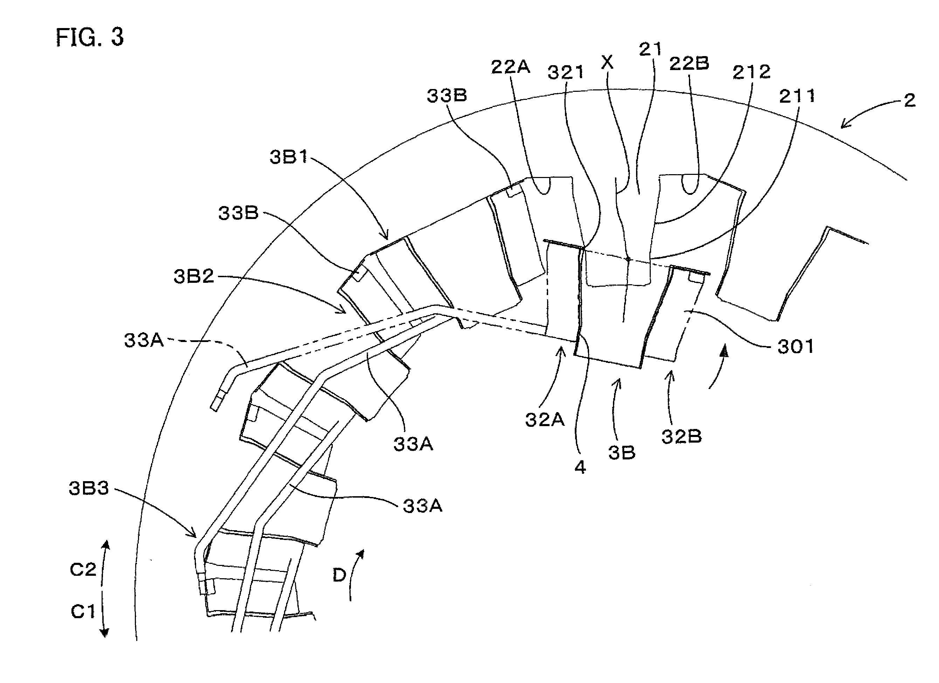

As shown in FIG. 1, in the first insertion step, the rotation placement coil 3B placed so as to directly face the tooth 21 is rotated about an axis parallel to the central axis of the stator core 2 so as to face in a tilted state the tooth 21. An outer peripheral end 321 of a one-side conductor portion 32A located on one side C1 in the circumferential direction of the rotation placement coil 3B is inserted into an opening of a one-side slot 22A located on the one side C1 in the circumferential direction of the tooth 21. Then, as shown in FIGS. 2 and 3, in the second insertion step, the outer peripheral end 321 of the one-side conductor portion 32A is moved along the tip-end parallel side surface 211 so that the one-side conductor portion 32A is inserted further into the one-side slot 22A. In the second insertion step, the rotation placement coil 3B is rotated about the outer peripheral end 321 of the one-side conductor portion 32A so that an outer peripheral end 321 of the other-side conductor portion 32B located on the other side in the circumferential direction of the rotation placement coil 3B is inserted into an opening of the other-side slot 22B located on the other side in the circumferential direction of the tooth 21.

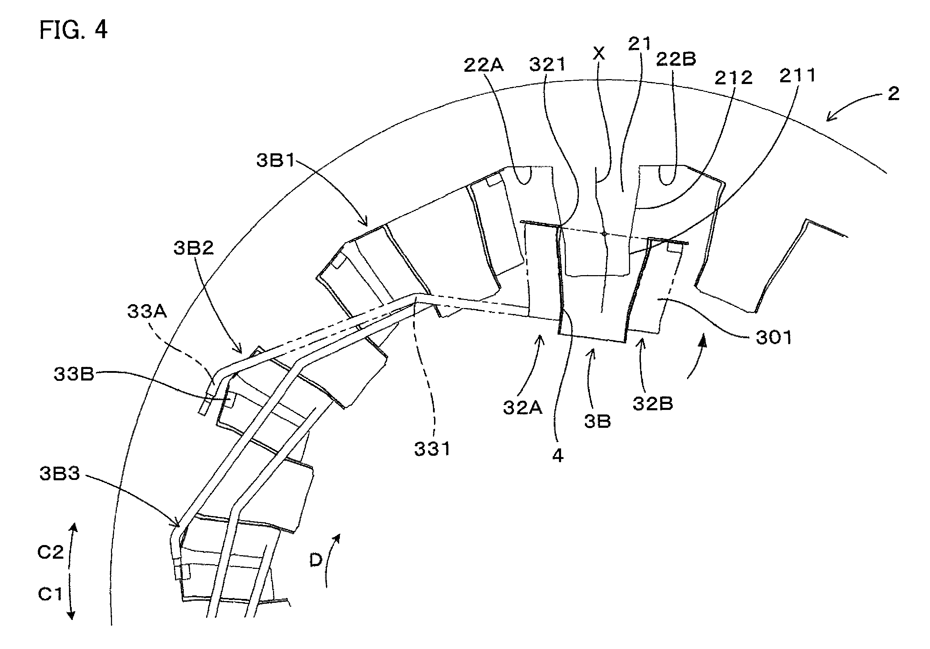

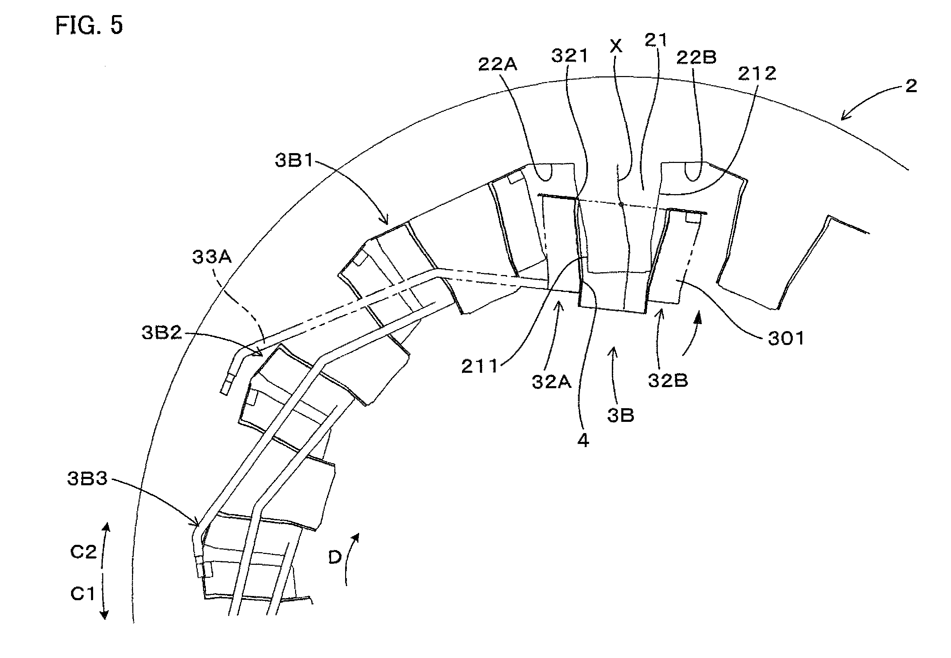

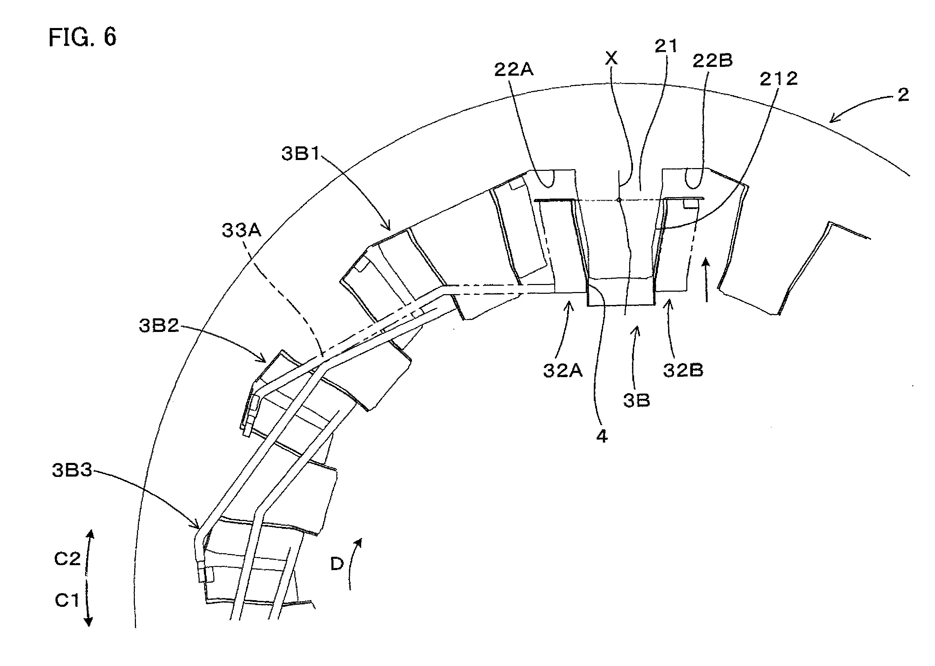

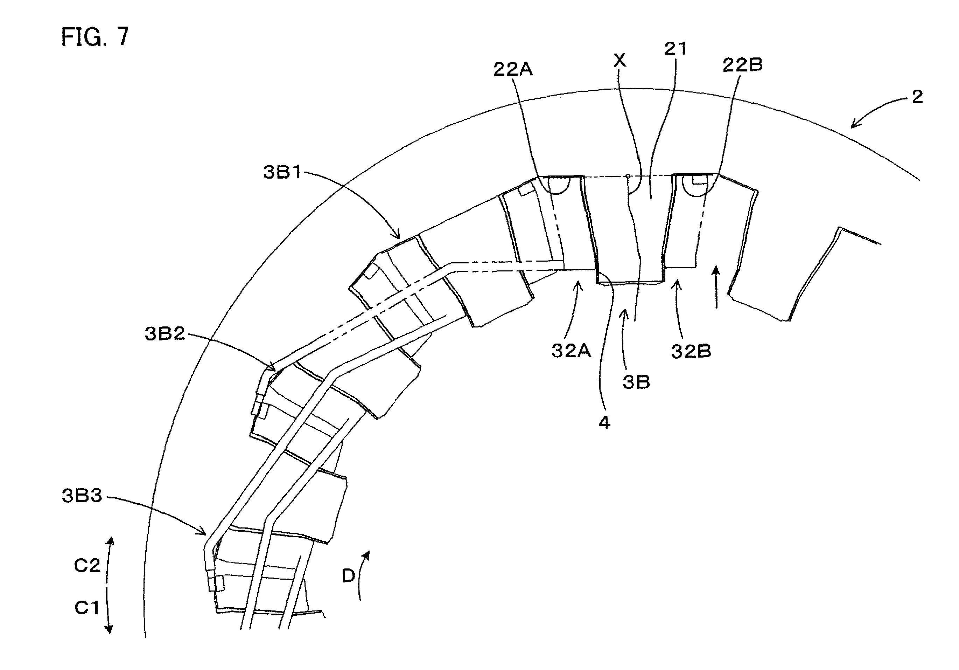

Subsequently, as shown in FIGS. 4 and 5, in the third insertion step, the outer peripheral end 321 of the one-side conductor portion 32A is moved along the base-end tilted side surface 212 so that the one-side conductor portion 32A is inserted further into the one-side slot 22A. In the third insertion step, the rotation placement coil 3B is rotated about the outer peripheral end 321 of the one-side conductor portion 32A so that the other-side conductor portion 32B is inserted further into the other-side slot 22B. Thereafter, as shown in FIGS. 6 and 7, in the fourth insertion step, the rotation placement coil 3B is made to directly face the tooth 21, and the one-side conductor portion 32A and the other-side conductor portion 32B are simultaneously inserted into the one-side slot 22A and the other-side slot 22B, respectively.

The method for manufacturing the stator 1 for a rotating electrical machine according to the present embodiment will be described in detail below with reference to FIGS. 1 to 14.

As shown in FIG. 12, the stator 1 of the present embodiment is used for a three-phase rotating electrical machine, and is formed by repeatedly placing three-phase coils, namely U-phase, V-phase, and W-phase coils 3U, 3V, 3W, a plurality of times in the same order on the plurality of teeth 21 of the stator core 2.

The coil 3 of each phase has a coil body 31 formed by winding the rectangular wire 301 into a plurality of turns, a first end 33A extended at one end of the coil body 31 to one side L1 in the axial direction of the stator core 2, and the second end 33B extended at the other end of the coil body 31 to the one side L1 in the axial direction of the stator core 2. The first end 33A of the coil 3 of each phase is extended in a direction perpendicular to the axial direction L of the stator core 2 to extend axially outward of and across the coil bodies 31 of the coils 3 of the other phases so that the first end 33A is placed on the second end 33B of the coil 3 of the same phase.

The first end 33A of the rotation placement coil 3B of each phase is bent toward the outer periphery at an intermediate position 331 of a portion extending from the coil 3 to the coil 3 adjoining this coil 3 as a crossover wire. The first end 33A of the rotation placement coil 3B therefore does not interfere with the second end 33B of the coil 3 adjoining this rotation placement coil 3B when rotating and placing the rotation placement coil 3B onto the tooth 21.

The coils 3 of each phase are bonded together by the first ends 33A and the second ends 33B, forming U-phase, V-phase, and W-phase connected coils. The connected coils of the three phases are star-connected. A neutral point 34 where the first ends 33A of the coils 3 of the three phases are bonded together is provided at the first ends 33A of the connected coils of the three phases, and lead portions 35 connected to the outside are provided at the second ends 33B of the connected coils 3 of the three phases.

The rectangular wire 301 forming the coil 3 of each phase has a substantially rectangular section, and is formed by coating the outer periphery of a conductor layer made of a copper material etc. with a coating layer made of a resin material etc. The rectangular wire 301 may have a flattened section having parallel flat surfaces.

The coil 3 of each phase of the present embodiment is a concentrated winding coil that is formed by extending the first end 33A and the second end 33B from the coil body 31 formed by winding the rectangular wire 301 in a plurality of turns. The coil 3 of each phase is individually attached one by one to the outer periphery of the tooth 21 so as to be placed in the slots 22A, 22B located on both sides in the circumferential direction of the tooth 21.

As shown in FIG. 1, the coil body 31 of the coil 3 of each phase is formed in a quadrilateral annular shape that is increased in diameter as closer to the outer periphery so as to conform to the shape of the tooth 21 which is formed by the tip-end parallel side surfaces 211 and the base-end tilted side surfaces 212. The coil body 31 in the coil 3 of each phase is formed by winding the rectangular wire 301 in two layers that overlap each other in the circumferential direction. The coil body 31 may be formed by winding the rectangular wire 301 in one layer or may be formed by winding the rectangular wire 301 in three or more layers that overlap each other in the circumferential direction.

The coil 3 of each phase is placed on the outer periphery of an insulator 4 as a resin that provides insulation between the coil 3 and the stator core 2. Each insulator 4 holds the coil body 31 on its outer periphery and is attached to the tooth 21.

In the method for manufacturing the stator 1 according to the present embodiment, the peripheral direction (placement direction) D in which the coils 3 are sequentially placed one by one is the same as the other side C2 in the circumferential direction.

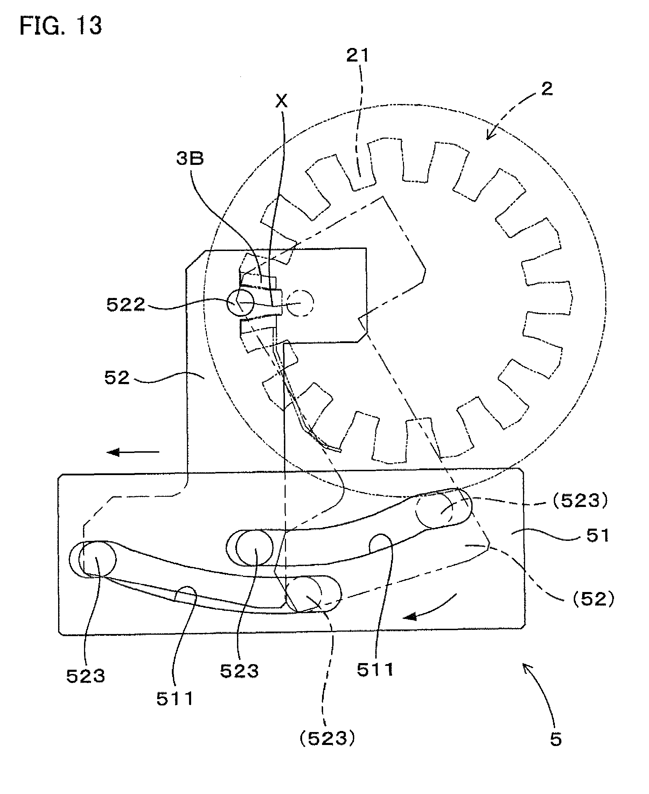

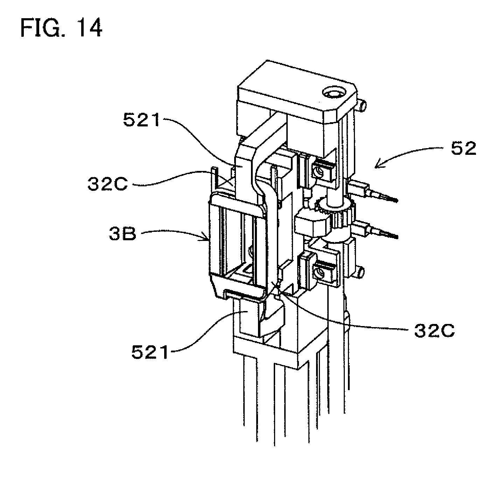

As shown in FIGS. 13 and 14, the manufacturing method of the present embodiment uses an assembly jig 5 having a movable jig part 52 that holds the rotation placement coil 3B and that is placed so as to face the inner periphery of the tooth 21, and a base jig part 51 where the movable jig part 52 is movably placed. The movable jig part 52 has a holding portion 521 that supports upper and lower conductor portions 32C of the rotation placement coil 3B. The movable jig part 52 can pivot with respect to the base jig part 51 by a pivot shaft portion 522 and can slide with respect to the base jig part 51 by a linear guide.

The base jig part 51 has two guide rails (guide grooves) 511 that form a path X in which the rotation placement coil 3B moves when being placed on the tooth 21 of the stator core 2. The movable jig part 52 has two rollers 523 that are placed in the two guide rails 511.

In the first to fourth insertion steps of the manufacturing method, when being slid by the linear guide, the movable jig part 52 pivots about the pivot shaft portion 522 and the two rollers 523 move along the two guide rails 511, whereby the holding portion 521 of the movable jig part 52 can be moved along the path X in which the rotation placement coil 3B moves. The rotation placement coil 3B can be placed on the tooth 21 by the first to fourth insertion steps.

In a conventional assembly jig, after a concentrated winding coil is made to face a tooth in a tilted manner, the coil is placed on the tooth by positional control of a 2-axis moving portion. Accordingly, if the position to which a coil is attached by the assembly jig changes while repeatedly attaching a coil with the assembly jig, a program for the positional control of the 2-axis moving portion etc. need be modified every time the position to which a coil is attached changes.

On the other hand, in the assembly jig 5 of the present embodiment, the base jig part 51 having the guide rails 511 can be adjusted in position with respect to an attachment part to which the base jig part 51 is attached. For example, in a structure in which a screw inserted through a through hole formed in the base jig part 51 is tightened into a threaded hole formed in the attachment part, a clearance provided between the through hole and the screw can be made larger than that provided between the guide rail 51 and the roller 523. Accordingly, even if the attachment position to which the coil 3 is attached changes, the attachment position can be easily corrected by adjusting the position of the base jig part 51 with respect to the attachment part.

A method for placing the three-phase coils 3 on the teeth 21 of the stator core 2 and functions and effects of the present embodiment will be described below.

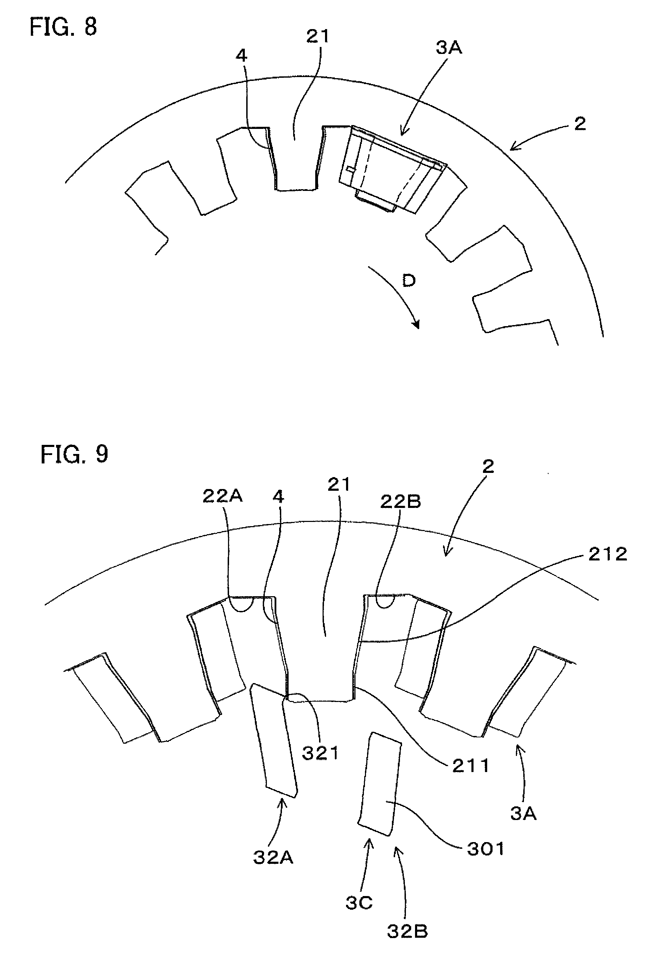

In the present embodiment, the insulator 4 that is to hold the last coil 3C to be placed on the tooth 21 of the stator core 2 is first attached to the tooth 21 (see FIG. 8). The three-phase coils 3U, 3V, 3W held on the outer periphery of the insulators 4 are then sequentially placed on the teeth 21 of the stator core 2 one by one in the circumferential direction D (see FIG. 12).

As shown in FIG. 8, the first coil 3A to be placed on the tooth 21 of the stator core 2 does not interfere with the coils 3 of the other phases which adjoin the first coil 3A. The first coil 3A can therefore be attached to the tooth 21 by causing the first coil 3A to directly face the inner periphery of the tooth 21 of the stator core 2 and moving parallel to the radial direction the first coil 3A toward the outer periphery. In the present embodiment, however, in order to simplify the assembly jig 5 that is used, the first coil 3A is placed on the tooth 21 by the first to fourth insertion steps similarly to the rotation placement coils 3B described below. In the present embodiment, the first and last coils 3A, 3C to be placed on the teeth 21 of the stator core 2 and the second rotation placement coil 3B to be placed on the tooth 21 are the coils that form the neutral point 34.

Next, the second and the following rotation placement coils 3B to be placed on the teeth 21 of the stator core 2 are placed on the teeth 21 by changing the attitude of the coils 3B in the first to fourth insertion steps as described below. FIGS. 1 to 7 show the process of placing the second rotation placement coil 3B from the last to be placed on the tooth 21 of the stator core 2. The rotation placement coil 3B has been wound around the insulator 4 when being placed on the tooth 21.

In FIGS. 1 to 7, the path X in which the rotation placement coil 3B is moved when being placed on the tooth 21 is shown regarding an outer peripheral central portion 322 of the rotation placement coil 3B.

As shown in FIG. 1, when placing the rotation placement coil 3B on the tooth 21 of the stator core 2, the rotation placement coil 3B placed so as to directly face the tooth 21 is first rotated about an axis parallel to the central axis of the stator core 2 in the first insertion step so as to face in a tilted state the tooth 21. At this time, the first end 33A of the rotation placement coil 3B passes between the first end 33A and the second end 33B of the immediately preceding rotation placement coil 3B 1 placed in the stator core 2, and protrudes beyond the outer periphery of the stator core 2.

The outer peripheral end 321 of the one-side conductor portion 32A of the rotation placement coil 3B is inserted into the opening of the one-side slot 22A located on the one side C1 in the circumferential direction of the tooth 21. In this step, the rotation placement coil 3B is tilted by an appropriate angle that allows the outer peripheral end 321 of the one-side conductor portion 32A to pass through the opening of the one-side slot 22A.

Then, as shown in FIGS. 2 and 3, in the second insertion step, the outer peripheral end 321 of the one-side conductor portion 32A of the rotation placement coil 3B is moved along the tip-end parallel side surface 211 so that the one-side conductor portion 32A is inserted further into the one-side slot 22A. At this time, the first end 33A of the rotation placement coil 3B is placed between the first end 33A and the second end 33B of the immediately preceding rotation placement coil 3B1 placed on the tooth 21 of the stator core 2 and between the first end 33A and the second end 33B of the rotation placement coil 3B2 placed on the tooth 21 of the stator core 2 two steps before the rotation placement coil 3B.

The rotation placement coil 3B is rotated about the outer peripheral end 321 of the one-side conductor portion 32A so that the outer peripheral end 321 of the other-side conductor portion 32B of the rotation placement coil 3B is inserted into the opening of the other-side slot 22B located on the other side in the circumferential direction of the tooth 21.

As shown in FIGS. 4 and 5, in the third insertion step, the outer peripheral end 321 of the one-side conductor portion 32A is then moved along the base-end tilted side surface 212 so that the one-side conductor portion 32A is inserted further into the one-side slot 22A. The rotation placement coil 3B is also rotated about the outer peripheral end 321 of the one-side conductor portion 32A so that the other-side conductor portion 32B is inserted further into the other-side slot 22B. At this time, the first end 33A of the rotation placement coil 3B approaches the second end 33B of the rotation placement coil 3B3 of the same phase placed in the stator core 2 three steps before the rotation placement coil 3B from the radially outer side.

In the second and third insertion steps, the rotation placement coil 3B is rotated and placed on the tooth 21. The one-side conductor portion 32A of the rotation placement coil 3B can thus be made not to interfere with the tooth 21 or the immediately preceding rotation placement coil 3B1 placed on the tooth 21.

The first end 33A of the rotation placement coil 3B is bent toward the outer periphery at the intermediate position 331. The first end 33A of the rotation placement coil 3B is thus made not to interfere with the second end 33B of the immediately preceding rotation placement coil 3B1 placed on the tooth 21 (see FIG. 4).

As shown in FIGS. 6 and 7, in the fourth insertion step, after the rotation placement coil 3B directly faces the tooth 21 (faces the front of the tooth 21), the one-side conductor portion 32A and the other-side conductor portion 32B are moved radially outward and placed simultaneously in the one-side slot 22A and the other-side slot 22B. At this time, the first end 33A of the rotation placement coil 3B is placed on the second end 33B of the rotation placement coil 3B3 of the same phase placed in the stator core 2 three steps before the rotation placement coil 3B from the radially outer side.

As shown in FIGS. 9 to 11, after each rotation placement coil 3B of the three-phase coils 3 is placed in the stator core 2, the last coil 3C to be placed on the tooth 21 of the stator core 2 is placed on the insulator 4 attached to the tooth 21 at the beginning. As shown in FIG. 9, in order to avoid interference between the last coil 3C and the coils 3 located on both sides and adjoining the last coil 3C, the last coil 3C is deformed into the shape of a rhombus so that the rectangular wires 301 located next to each other in the winding axial direction are shifted in the lateral direction. The outer peripheral end 321 of the one-side conductor portion 32A which has an acute-angled corner is first inserted into the one-side slot 22A, and the outer peripheral end 321 of the other-side conductor portion 32B which has an obtuse-angled corner is later inserted into the other-side slot 22B.

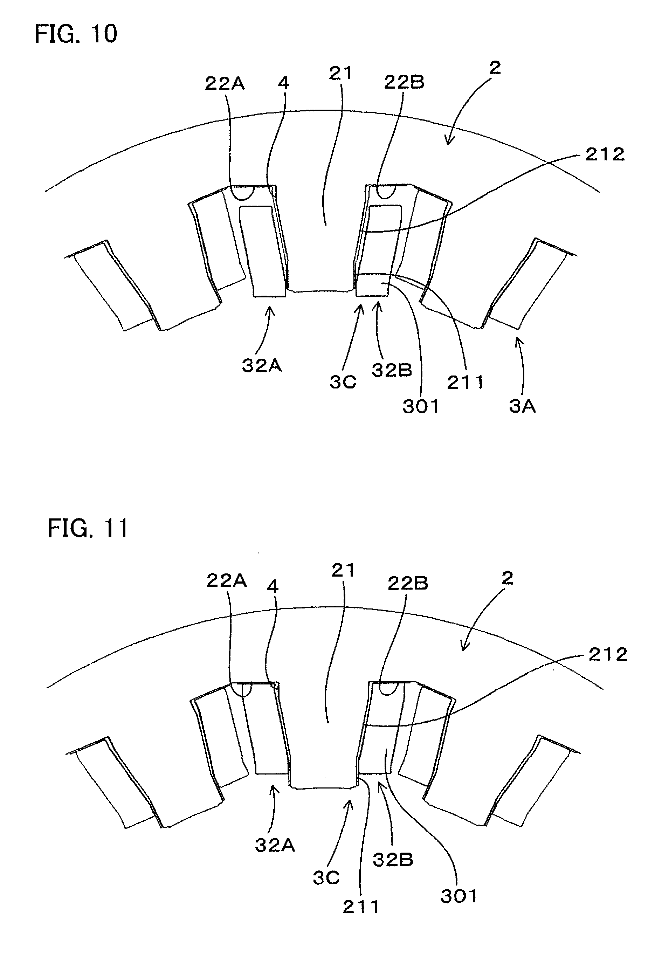

The deformed last coil 3C gradually returns to its original shape as the one-side conductor portion 32A and the other-side conductor portion 32B are inserted further into the slots 22A, 22B. As shown in FIG. 10, the deformed last coil 3C returns to its original shape at the position where the outer peripheral end 321 of the one-side conductor portion 32A and the outer peripheral end 321 of the other-side conductor portion 32B face the base-end tilted surfaces 212 of the tooth 21, and the last coil 3C thus directly faces the tooth 21. As shown in FIG. 11, the last coil 3C is then inserted onto the tooth 21 from the front of the tooth 21, so that the one-side conductor portion 32A and the other-side conductor portion 32B are simultaneously inserted into the one-side slot 22A and the other-side slot 22B.

All of the three-phase coils 3A, 3B, 3C are placed on the teeth 21 of the stator core 2 in this manner.

As shown in FIG. 12, in the stator core 2, the first ends 33A and the second ends 33B of the coils 3 of the same phase which are placed on each other, the first ends 33A forming the neutral point 34, and the second ends 33B forming the lead portions 35 can be bonded by welding.

The first to fourth insertion steps are thus sequentially performed for the first coil 3A and all the rotation placement coils 3B, and all the rotation placement coils 3B are sequentially placed on the teeth 21 of the stator core 2 one by one in the circumferential direction D. All the rotation placement coils 3B can be smoothly placed on the teeth 21 without the need to be deformed.

In the method for manufacturing the stator 1 for a rotating electrical machine according to the present embodiment, the first coil 3A to be placed on the tooth 21 and all the rotation placement coils 3B can therefore be smoothly placed on the teeth 21 without the need to be deformed.

The way in which the rotation placement coils 3B are placed in the stator core 2 can easily prevent the first end 33A of each rotation placement coil 3B from interfering with the coils 3 of the other phases that have already been placed on the teeth 21. Moreover, the way in which the rotation placement coils 3B are placed in the stator core 2 eliminates the need to shift the positions where the first end 33A and the second end 33B are formed in the axial direction among the three-phase coils 3. This can reduce the amount by which the first end 33A and the second end 33B of the coil 3 of each phase protrude beyond an axial end face 201 of the stator core 2.

The first end 33A of the coil 3 of each phase can be bent in advance before this coil 3 is placed in the stator core 2. This eliminates the need for a process such as bending of the coils 3 placed in the stator core 2, which can also reduce the amount by which the first end 33A and the second end 33B of the coil 3 of each phase protrude beyond the axial end face 201 of the stator core 2.

## Claims

1. A method for manufacturing a stator for a rotating electrical machine by placing a plurality of coils in a stator core, **characterized in that**
each of a plurality of teeth formed in a radial pattern in an inner periphery of an annular yoke portion in the stator core has tip-end parallel side surfaces at its tip end portion having a constant width in a circumferential direction, and has base-end tilted side surfaces in its base end portion whose width in the circumferential direction increases as closer to an outer periphery,
when sequentially placing the coils on the teeth of the stator core one by one in the circumferential direction, at least one of the plurality of rotation placement coils other than the last coil to be placed on the tooth is placed on the tooth by performing
a first insertion step of rotating the rotation placement coil placed so as to directly face the tooth about an axis parallel to a central axis of the stator core so that the rotation placement coil faces in a tilted state the tooth, and inserting an outer peripheral end of a one-side conductor portion located on one side in the circumferential direction of the rotation placement coil into an opening of a one-side slot located on the one side in the circumferential direction of the tooth,
a second insertion step of moving the outer peripheral end of the one-side conductor portion along the tip-end parallel side surface so as to insert the one-side conductor portion further into the one-side slot, and rotating the rotation placement coil about the outer peripheral end of the one-side conductor portion so as to insert an outer peripheral end of the other-side conductor portion located on the other side in the circumferential direction of the rotation placement coil into an opening of the other-side slot located on the other side in the circumferential direction of the tooth,
a third insertion step of moving the outer peripheral end of the one-side conductor portion along the base-end tilted side surface so as to insert the one-side conductor portion further into the one-side slot, and rotating the rotation placement coil about the outer peripheral end of the one-side conductor portion so as to insert the other-side conductor portion further into the other-side slot, and
a fourth insertion step of causing the rotation placement coil to directly face the tooth, and simultaneously inserting the one-side conductor portion and the other-side conductor portion into the one-side slot and the other-side slot.

2. The method for manufacturing a stator for a rotating electrical machine according to claim 1, **characterized in that**
all of the coils are formed by winding a rectangular wire in a plurality of layers arranged in the circumferential direction so that the coil conforms to a shape of the tooth which is formed by the tip-end parallel side surfaces and the base-end tilted side surfaces.

3. The method for manufacturing a stator for a rotating electrical machine according to claim 1 or 2, **characterized in that**
the rotation placement coil has been wound around an insulator made of an insulating resin when being placed on the tooth.

4. The method for manufacturing a stator for a rotating electrical machine according to any one of claims 1 to 3, **characterized in that**
the insulator for the last coil to be placed on the tooth is placed in advance on the tooth, and
the last coil is deformed into a shape of a rhombus so that the rectangular wires located next to each other in a winding axial direction are shifted in a lateral direction, and one of the outer peripheral end of the one-side conductor portion and the outer peripheral end of the other-side conductor portion which has an acute-angled corner is first inserted into the slot.

5. The method for manufacturing a stator for a rotating electrical machine according to any one of claims 1 to 4, **characterized in that**
the method uses an assembly jig having a movable jig part that holds the rotation placement coil and that is placed so as to face an inner periphery of the tooth, and a base jig part where the movable jig part is movably placed, and
in the first to fourth insertion steps, the rotation placement coil held by the movable jig part is placed on the tooth by moving a roller provided in the movable jig part along a guide rail provided in the base jig part.
